# EUROPEAN PATENT APPLICATION

(11) **EP 3 747 966 A1**
(43) Date of publication of application: **09.12.2020**
(21) Application number: 19746862.2
(22) Date of filing: 30.01.2019
(51) Int. Cl.: C09D 183/00, B32B 27/00, B32B 27/20, C09D 5/00, C09D 7/20, C09D 7/61, G02B 1/14

(54) **COATING COMPOSITION AND OPTICAL ARTICLE HAVING HARD COAT FILM**

(30) Priority: 30.01.2018 JP 2018013747
(71) Applicant: Tokuyama Corporation, Shunan-shi, Yamaguchi 745-0053 (JP)
(72) Inventor: OSHIO, Manami, Shunan-shi, Yamaguchi 745-0053 (JP); MORI, Katsuhiro, Shunan-shi, Yamaguchi 745-0053 (JP); KAWABATA, Yuuichirou, Shunan-shi, Yamaguchi 745-0053 (JP)
(74) Representative: Beckmann, Claus
(86) International application number: PCT/JP2019/003133
(87) International publication number: WO 2019/151311

(57) **Abstract**

A coating composition comprising (A) inorganic oxide fine particles, (B) a hydrolyzable group-containing organic silicon compound, (C) water or an acid aqueous solution, (D) a curing catalyst and (E) an organic solvent, wherein the inorganic oxide fine particles (A) contain 100 parts by mass of (A1) first inorganic oxide fine particles containing not less than 50 mass% of a zirconium oxide component and 0.1 to 90 parts by mass of (A2) cerium oxide fine particles. This coating composition is used to form a hard coat film.

## Description

### TECHNICAL FIELD

The present invention relates to a coating composition and an optical article which is a laminate having a hard coat film (cured product layer) formed from the coating composition. More specifically, it relates to a coating composition for forming an optimum hard coat film on the surface of a resin substrate having a high refractive index of more than 1.50, for example, a lens, or the surface of a photochromic plastic optical substrate such as a photochromic plastic lens.

### BACKGROUND ART

Plastic lenses have features such as lightweight, safety, easy workability and fashionability that glass lenses do not have and now become mainstream in the spectacle lens field. However, for example, diethylene glycol bisallyl carbonate resin lenses which are now widely used have a low refractive index of 1.50 which is lower than that of glass lenses and therefore have a defect that the peripheries of the lenses become thick. Therefore, in the field of resin lenses, synthetic resin lenses having a high refractive index are used to be made thin. Antiglare lenses manufactured by dyeing plastic lenses (may also be referred to as "dyed lenses" hereinafter) are also used.

Meanwhile, since a plastic lens is easily scratched, a silicone-based hard coat film is formed on the surface of the lens to overcome this defect. This silicone-based hard coat film is formed by mixing a coating composition comprising silica fine particles, an organic silicon compound having a hydrolyzable group, a curing catalyst, an acid aqueous solution and a water-soluble solvent as main components (what comprises the silica fine particles may be referred to as "low-refractive index coating composition" hereinafter), applying it to the surface of a plastic lens and heating it to cure the coating film and volatize the contained solvent (refer to Patent Document 1).

However, when the hard coat film is formed on a plastic lens having a high refractive index of more than 1.50 by using the above low-refractive index coating composition, interference fringes occur due to the difference in refractive index between the plastic lens and the hard coat film, thereby causing an appearance defect.

To solve this problem, there is known a coating composition obtained by substituting the silica fine particles which is one of the components of the coating composition by a composite metal oxide of Sb, Ti, Zr or Sn having a high refractive index (refer to Patent Document 2) . This coating composition can be advantageously used for high-refractive index plastic lenses. However, since a coating composition comprising titanium oxide causes the deterioration of a hard coat film itself due to the photocatalytic activity of titanium oxide, there is room for the improvement of weatherability.

To avoid this photocatalytic ability of titanium oxide, a high-refractive index coating composition comprising no titanium oxide was developed (refer to Patent Document 3). Although this coating composition can prevent the deterioration of a hard coat film itself, the ultraviolet absorptivity of titanium oxide is not obtained, thereby making it impossible to suppress photodegradation mechanism between the hard coat film and the plastic lens, whereby adhesion between the hard coat film and the plastic lens may lower when the plastic lens is exposed to light for a long time (adhesion between the hard coat film and the plastic lens after exposure to light may be referred to as "weather-resistant adhesion" hereinafter).

Further, a method of improving weather-resistant adhesion by containing cerium oxide fine particles subjected to a surface treatment with a surfactant into a hard coat film so as to provide ultraviolet absorptivity to the hard coat film is now under study (refer to Patent Documents 4 and 5) . Weather-resistant adhesion can be improved by using this coating composition.

However, the coating composition of Patent Document 4 has room for improvement since a hard coat film having high scratch resistance cannot be formed. Further, according to the method of Patent Document 4, there is room for improvement since coloration occurs according to inorganic oxide fine particles in use when a coating agent is prepared. The coating composition of Patent Document 5 has room for the improvement of the following point. A coating composition having higher adhesion, particularly a coating composition having higher adhesion and higher weather-resistant adhesion than those of the prior art (coating composition of Patent Document 5) is now desired for high-refractive index lenses. Further, a coating composition which prevents the occurrence of interference fringes and has excellent scratch resistance is desired for high-refractive index lenses.

### PRIOR ART DOCUMENTS

### Patent Documents

Patent Document 1: JP-B 57-2735
Patent Document 2: JP-A 5-264805
Patent Document 3: JP-A 2004-224965
Patent Document 4: JP-A 2006-70078
Patent Document 5: JP-A 2011-084677

### DISCLOSURE OF THE INVENTION

### Problems to be solved by the Invention

It is therefore an object of the present invention to provide a coating composition which has high adhesion to an optical substrate such as a plastic lens, hardly produces an appearance defect such as interference fringes in a high-refractive index lens in particular, has excellent weather-resistant adhesion, that is, long-term weatherability, is excellent in adhesion when an acceleration climatic test is conducted and rarely yellows. It is another object of the present invention to provide a coating composition for forming a hard coat film having excellent scratch resistance.

Other objects and advantages of the present invention will become apparent from the following description.

### MEANS FOR SOLVING THE PROBLEMS

The inventors of the present invention conducted intensive studies to solve the above problem and found that the above problem can be solved by a coating composition comprising (A) inorganic oxide fine particles containing at least (A1) first inorganic oxide fine particles containing a zirconium oxide component as the main component and (A2) cerium oxide fine particles, (B) a hydrolysable organic silicon compound, (C) water or an acid aqueous solution, (D) a curing catalyst and (E) an organic solvent, wherein (A1) the first inorganic oxide fine particles and (A2) the cerium oxide fine particles (A2) are contained in a specific ratio. The present invention was accomplished based on this finding.

That is, the first invention is (1) a coating composition comprising (A) inorganic oxide fine particles (may be simply referred to as "component (A)" hereinafter), (B) a hydrolyzable group-containing organic silicon compound (may be simply referred to as "component (B)" hereinafter), (C) water or an acid aqueous solution (may be simply referred to as "component (C)" hereinafter), (D) a curing catalyst (may be simply referred to as "component (D)" hereinafter) and (E) an organic solvent (the organic solvent (E) does not include an aromatic alcohol (F), may be simply referred to as "component (E)" hereinafter), wherein
the above inorganic oxide fine particles (A) contain 100 parts by mass of (A1) first inorganic oxide fine particles containing not less than 50 mass% of a zirconium oxide component (may be simply referred to as "component (A1)" hereinafter) and 0.1 to 90 parts by mass of (A2) cerium oxide fine particles (may be simply referred to as "component (A2)" hereinafter).

The present invention may take the following modes.
(2) The coating composition in the above paragraph (1) which comprises 40 to 80 parts by mass of the above component (B), 1 to 90 parts by mass of the above component (C), 0.1 to 5 parts by mass of the above component (D) and 50 to 500 parts by mass of the component (E) based on 100 parts by mass of the total of the components (A) and (B). The amount of the component (A) is the total amount of at least the components (A1) and (A2).
(3) The coating composition in the above paragraph (1) or (2), wherein the curing catalyst (D) contains an acetylacetonate complex.
(4) The coating composition in any one of the above paragraphs (1) to (3), wherein the hydrolyzable group-containing organic silicon compound (B) contains at least one of an organic silicon compound containing a γ-glycidoxy group and an organic silicon compound containing an amino group.
(5) The coating composition in any one of the above paragraphs (1) to (4), wherein the organic solvent (E) contains at least one selected from the group consisting of (Ea) an aliphatic alcohol having a boiling point of not higher than 100°C, (Eb) a cellosolve-based alcohol having a boiling point of not lower than 100°C and (Ec) a high-boiling point solvent having a boiling point of not lower than 150°C.
(6) The coating composition in the above paragraph (5), wherein 70 to 200 parts by mass of the aliphatic alcohol having a boiling point of not higher than 100°C (Ea), 10 to 50 parts by mass of the cellosolve-based alcohol having a boiling point of not lower than 100°C (Eb) and 10 to 100 parts by mass of the high-boiling point solvent having a boiling point of not lower than 150°C (Ec) are used based on 100 parts by mass of the total of the components (A) and (B).
(7) An optical article having a hard coat film which is a cured product of the coating composition in any one of the paragraphs (1) to (6) on a plastic optical substrate containing sulfur and having a refractive index of not less than 1.59 and a thermal deformation temperature of not higher than 125°C.
(8) A method of forming a hard coat film on a plastic optical substrate by dipping the optical substrate into the coating composition in any one of the above paragraphs (1) to (6), wherein the optical substrate is vertically fixed at three locations with a fixing jig having three arms for fixing the optical substrate at the three locations to be dipped into the coating composition, the above three locations consist of one for fixing the lower end part of the optical substrate when seen from the surface of a dip solution and two for fixing the optical substrate at a position having an angle of 90 to 180° and at a position having an angle of 180 to 270° from the lower end part, and the two arms for fixing the two locations different from the lower end part extend downward when seen from the positions of the two locations.

### EFFECT OF THE INVENTION

The coating composition of the present invention can form a hard coat film which rarely produces interference fringes even in a high-refractive index lens and has excellent adhesion, especially weather-resistant adhesion, when it comprises the inorganic oxide fine particles (A) containing the first inorganic oxide fine particles (A1) containing a zirconium oxide component as the main component and the cerium oxide fine particles (A2) in a specific ratio. This adhesion improving effect is further developed by containing the aromatic alcohol (F).

Further, when an acetylacetonate complex is used in a specific ratio as the curing catalyst (D), a hard coat film having excellent scratch resistance can be formed.

According to the present invention, a hard coat film having high adhesion to a substrate can be formed only by a chemical treatment with an alkali solution which has been commonly used in the prior art. Further, as the hard coat film has improved hot water resistance, even when it is brought into contact with hot water, the reduction of adhesion can be suppressed.

### BRIEF DESCRIPTION OF THE FIGURES

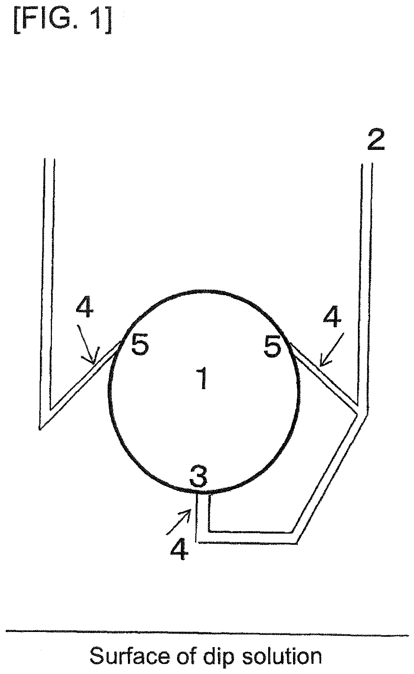

[Fig. 1] Fig. 1 shows a fixing jig having three arms for fixing an optical substrate at three locations. The above three locations consist of one for fixing the lower end part of the optical substrate when seen from the surface of a dip solution and two for fixing the optical substrate at a position having an angle of 90 to 180° and at a position having an angle of 180 to 270° from the lower end part, and the two arms for fixing the two locations different from the above lower end part extend downward when seen from the positions of the two locations, that is, extend in a truncated chevron shape when seen from the front of the lens.

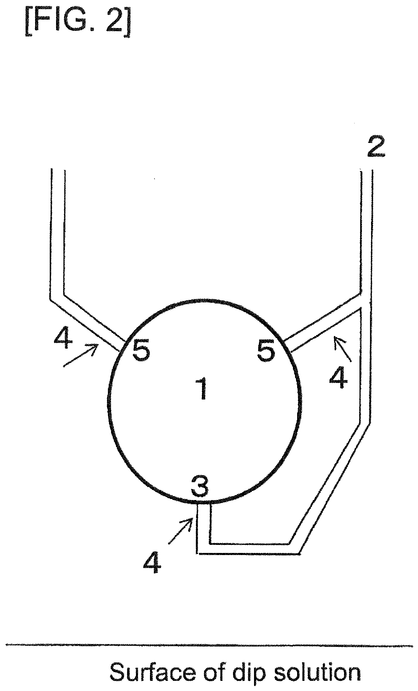

[Fig. 2] Fig. 2 shows another fixing jig having three arms for fixing the optical substrate at three locations. The above three locations consist of one for fixing the lower end part of the optical substrate when seen from the surface of the dip solution and two for fixing the optical substrate at a position having an angle of 90 to 180° and at a position having an angle of 180 to 270° from the lower end part, and the two arms for fixing the two locations different from the above lower end part extend upward when seen from the positions of the two locations, that is, extend in a reversed truncated chevron shape when seen from the front of the lens.

### BEST MODE FOR CARRYING OUT THE INVENTION

The coating composition of the present invention comprises (A) inorganic oxide fine particles, (B) a hydrolyzable group-containing organic silicon compound, (C) water or an acid aqueous solution, (D) a curing catalyst and (E) an organic solvent as essential components. When the composition comprises the above components (A) to (E) and the above component (A) contains (A1) first inorganic oxide fine particles containing a zirconium oxide component as the main component and (A2) cerium oxide fine particles in a specific ratio, the coating composition can exhibit the excellent effect (especially weather-resistant adhesion) of the present invention.

A description is subsequently given of each of the components constituting the coating composition of the present invention.

### <inorganic oxide fine particles (A)>

In the coating composition of the present invention, the inorganic oxide fine particles (A) contain at least the first inorganic oxide fine particles (A1) containing a zirconium oxide component as the main component and the cerium oxide fine particles (A2). A description is first given of these components (A1) and (A2).

### <first inorganic oxide fine particles (A1)>

In the present invention, the first inorganic oxide fine particles (A1) contain not less than 50 mass% of a zirconium oxide (ZrO₂) component (zirconium oxide is the main component) . When the zirconium oxide component is contained in an amount of not less than 50 mass%, weather-resistant adhesion can be further improved. The component (A1) may contain an oxide other than the zirconium oxide component in an amount of less than 50 mass%. The other oxide which may be contained is preferably an oxide containing at least one element selected from the group consisting of Si, Al, Ti, Fe, In, Au, Sn, Sb and W.

When the first inorganic oxide fine particles (A1) contain not less than 50 mass% of the zirconium oxide component, they may contain the above other oxide and may be composite oxide fine particles containing zirconium oxide. Stated more specifically, preferably, the component (A1) contains 50 to 100 mass% of zirconium oxide, 0 to 50 mass% of titanium oxide, 0 to 50 mass % of tin oxide, 0 to 20 mass% of antimony pentoxide, 0 to 10 mass% of tungsten oxide and 0 to 25 mass% of silicon dioxide. When weather-resistant adhesion in particular is taken into consideration, titanium oxide should not be contained. When application to a high-refractive index lens is taken into consideration, it is preferred that the amount of the zirconium oxide component should be not less than 70 mass%. When weather-resistant adhesion and application to a high-refractive index lens in particular are taken into consideration, it is preferred that the amount of the zirconium oxide component should be 100 mass%, that is, the component (A1) should be first inorganic oxide fine particles composed of not a composite oxide but zirconium oxide alone. It is not our intention that the existence of an oxide of another element which cannot be avoided inevitably is excluded.

The particle diameter of each first inorganic oxide fine particle (A1) is the same as that used in a conventional coating agent. First inorganic oxide fine particles having a primary particle diameter observed through an electron microscope (TEM) of 1 to 300 nm may be preferably used. To improve the scratch resistance of a plastic optical substrate, first inorganic oxide fine particles having a primary particle diameter of not more than 10 nm are preferred and first inorganic oxide fine particles having a primary particle diameter of 1 to 6 nm are more preferred when the surface of a thiourethane-based resin optical substrate having a refractive index of not less than 1.59 and a glass transition temperature of not higher than 125°C is coated. The fine particles having this particle diameter are generally dispersed in water or an organic solvent, especially an alcohol-based solvent which will be described hereinafter as a dispersion medium before use. In general, the agglomeration of the fine particles is prevented by the colloidal dispersion of the fine particles. In the present invention, it is preferred that the above first inorganic oxide fine particles (A1) in the form of sol prepared by dispersing in a water-soluble solvent or water should be blended into the coating composition since the above first inorganic oxide fine particles (A1) can be dispersed in the hard coat film uniformly and densely.

When the first inorganic oxide fine particles (A1) in the form of sol are used, to further improve operability, the concentration (solid content concentration) of the inorganic oxide fine particles in the sol is preferably 10 to 50 mass%.

Examples of the organic solvent used as the dispersion medium for the first inorganic oxide fine particles (A1) in the present invention include alcohols such as n-butanol, 2-butanol, t-butanol, isopropanol, ethanol, methanol and ethylene glycol; cellosolves such as propylene glycol monomethyl ether, propylene glycol monomethyl ether acetate, ethylene glycol monomethyl ether and ethylene glycol monoethyl ether; and methyl ethyl ketone, methyl isobutyl ketone and dimethyl acetamide. These organic solvents may be used alone or as a mixed solvent of a plurality of organic solvents or a mixed solvent of an organic solvent and water. Out of the above dispersion media, water, alcohol, or mixed solvent of water and alcohol is preferably used.

The above first inorganic oxide fine particles (A1) are commercially available in the form of sol prepared by using an organic solvent as a dispersion medium, as exemplified by the SZR series of Sakai Chemical Industry Co., Ltd., the HZ series and ZR series of Nissan chemical Industries, Ltd., and the AX-ZP series of Nippon Shokubai Co., Ltd. Out of these, from the viewpoints of the appearance of the hard coat film and the stability of the coating composition, the SZR series of Sakai Chemical Industry Co., Ltd. are preferably used, and the SZR-M having a small primary particle diameter is more preferably used.

### <cerium oxide fine particles (A2)>

When the cerium oxide (CeO₂) fine particles are used in the present invention, any known cerium oxide fine particles may be used without restriction. When the operability of the coating composition and the uniform dispersion of the cerium oxide fine particles in the hard coat film are taken into consideration, it is preferred to use sol prepared by dispersing the cerium oxide fine particles (A2) in water or an alcohol-based solvent as a dispersion medium in a colloidal state. Cerium oxide fine particles having a primary particle diameter of 1 to 300 nm may be preferably used. Out of these, cerium oxide fine particles having a primary particle diameter of not more than 100 nm are more preferred, and cerium oxide fine particles having a primary particle diameter of 1 to 40 nm are much more preferred. The solid content concentration (concentration of cerium oxide fine particles (A2) in sol) is preferably 10 to 50 mass%, particularly preferably 10 to 40 mass%. Although the oxide of another element may be contained in the cerium oxide fine particles (A2) as long as the effect of the present invention is not impaired, it is preferred that the component (A2) should be composed of the cerium oxide fine particles alone. It is not our intention that the oxide of another element which cannot be avoided inevitably is excluded.

Out of these cerium oxide fine particles (A2), it is preferred to use cerium oxide fine particles dispersed in an acid aqueous solution (sol). By using the cerium oxide fine particles (A2) dispersed in the acid aqueous solution, the dispersion of the cerium oxide fine particles themselves is more stabilized, thereby making it possible to improve the storage stability of the coating composition itself. It is assumed that the reason for this is that the hydrolyzed organic silicon compound is bonded to the surface of cerium oxide by using the cerium oxide fine particles (A2) dispersed in the acid aqueous solution with the result that the storage stability of the coating composition is enhanced.

To prepare the acid aqueous solution, a known acidic compound is preferably used, as exemplified by sulfuric acid, hydrochloric acid, nitric acid, formic acid, acetic acid, phthalic acid, malic acid, maleic acid, oxalic acid, lactic acid, malic acid, citric acid, tartaric acid, salicylic acid, glycolic acid, benzoic acid, malonic acid and mandelic acid. Out of these, acetic acid is preferably used. Although the acid aqueous solution is not particularly limited, it preferably has a pH of 2 to 6. When acetic acid is used, the concentration of acetic acid should be controlled to a range of 1 to 10 mass% in the acid aqueous solution containing the cerium oxide fine particles.

The cerium oxide fine particles (A2) dispersed in the acid aqueous solution are commercially available, as exemplified by the NEEDLAL U-15 (registered trademark) of Taki Chemical Co., Ltd.

A description is subsequently given of the amount of cerium oxide.

### <amount of cerium oxide fine particles (A2)>

In the present invention, the amount of the cerium oxide fine particles (A2) must be 0.1 to 90 parts by mass based on 100 parts by mass of the above component (A1). When the amount of the above component (A2) is smaller than 0.1 part by mass, weather-resistant adhesion does not improve disadvantageously. When the amount of the above component (A2) is larger than 90 parts by mass, the coating composition itself is colored and its yellowness (YI) tends to become high, thereby making it difficult to form a transparent hard coat film disadvantageously. When the weather-resistant adhesion and transparency of the obtained hard coat film are taken into consideration, the amount of the above component (A2) is preferably 5 to 80 parts by mass based on 100 parts by mass of the above component (A1). To achieve high transparency while keeping weather-resistant adhesion, the amount of the above component (A2) is preferably 7 to 60 parts by mass, more preferably 8 to 50 parts by mass, much more preferably 10 to 40 parts by mass, particularly preferably 10 to 25 parts by mass based on 100 parts by mass of the above component (A1).

A description is subsequently given of the hydrolyzable organic silicon compound (B) which is another essential component.

### <hydrolyzable group-containing organic silicon compound (B)>

The hydrolyzable group-containing organic silicon compound (may also be simply referred to as "organic silicon compound" hereinafter) in the coating composition of the present invention is a component for forming a transparent cured body which will become a matrix when the coating composition is cured to form a hard coat film and serves as a binder for the above inorganic oxide fine particles (A).

As the above organic silicon compound, known organic silicon compounds may be used. Compounds having an alkoxy group as a hydrolyzable group are preferred and compounds having two or more alkoxy groups bonded to a silicon atom are more preferred.

Examples of this component (B) are given below.

γ-glycidoxypropyl trimethoxysilane, γ-glycidoxypropyl methyldimethoxysilane, γ-glycidoxypropyl methyldiethoxysilane, γ-glycidoxypropyl triethoxysilane, 5,6-epoxyhexyl triethoxysilane, β-(3,4-epoxycyclohexyl)ethyl trimethoxysilane, tetraethoxysilane, tetramers of tetramethoxysilane, pentamers of tetraethoxysilane, vinyl trimethoxysilane, vinyl triethoxysilane, vinyl triacetoxysilane, methyl trimethoxysilane, methyl triethoxysilane, methyl triphenoxysilane, dimethyl dimethoxysilane, trimethyl methoxysilane, phenyl trimethoxysilane, diphenyl dimethoxysilane, cyclohexyl methyldimethoxysilane, 1,2-bis(trimethoxysilyl)ethane, 1,2-bis(triethoxysilyl)ethane, 1,3-bis(trimethoxysilyl)propane, 1,3-bis(triethoxysilyl)propane, 1,6-bis(trimethoxysilyl)hexane, 1,6-bis(triethoxysilyl)hexane, n-propyl trimethoxysilane, n-butyl trimethoxysilane, isobutyl trimethoxysilane, isobutyl triethoxysilane, n-hexyl trimethoxysilane, n-hexyl triethoxysilane, n-octyl triethoxysilane, n-decyl trimethoxysilane, 3-ureidopropyl triethoxysilane, bis[3-(diethoxymethylsilyl)propyl]carbonate, trifluoropropyl trimethoxysilane, perfluorooctyl ethyltriethoxysilane, γ-chloropropyl trimethoxysilane, vinyl tri(β-methoxy-ethoxy)silane, allyl trimethoxysilane, γ-acryloxypropyl trimethoxysilane, γ-acryloxypropyl triethoxysilane, γ-methacryloxypropyl trimethoxysilane, γ-methacryloxypropyl triethoxysilane, γ-methacryloxypropyl dimethoxymethylsilane, γ-mercaptopropyl trialkoxysilane, γ-aminopropyl trimethoxysilane, γ-aminopropyl triethoxysilane, N-phenyl-γ-aminopropyl trimethoxysilane, N-2(aminoethyl)3-aminopropyl triethoxysilane, N-2(aminoethyl)3-aminopropyl trimethoxysilane, N-2(aminoethyl)3-aminopropylmethyl dimethoxysilane, p-styryl trimethoxysilane, 3-isocyanatopropyl triethoxysilane, and hydrolyzed products of some or all of the hydrolysable groups or partial condensates of the above organic silicon compounds.

In the present invention, organic silicon compounds containing an amino group are preferred as the organic silicon compounds which further improve the weather-resistant adhesion of the hard coat film to a plastic optical substrate, and therefore, γ-aminopropyl trimethoxysilane, γ-aminopropyl triethoxysilane, N-phenyl-γ-aminopropyl trimethoxysilane, N-2(aminoethyl)3-aminopropyl triethoxysilane, N-2(aminoethyl)3-aminopropyl trimethoxysilane and N-2(aminoethyl)3-aminopropyl methyldimethoxysilane are preferably used.

In the present invention, out of these, γ-glycidoxypropyl trimethoxysilane, γ-glycidoxypropyl triethoxysilane, γ-glycidoxypropyl methyldimethoxysilane and γ-glycidoxypropyl methyldiethoxysilane all of which are organic silicon compounds containing a γ-glycidoxy group are preferably used as the organic silicon compounds which further improve adhesion to a plastic optical substrate and crosslinkability.

Organic silicon compounds having four hydrolyzable alkoxy groups in the molecule such as tetraethoxysilane and tetramethoxysilane, di- to tetra-mers of tetraethoxysilane or tetramethoxysilane (tetramers have 10 alkoxy groups in one molecule), methyl triethoxysilane, 1,2-bis(trimethoxysilyl)ethane and 1,2-bis(triethoxysilyl)ethane are preferably used as the organic silicon compounds which make the formed hard coat film dense and further improve the scratch resistance of a plastic optical substrate. When the proportion of the organic silicon compound which improves scratch resistance becomes large, storage stability may deteriorate. It is considered that the reason for this is that the organic silicon compound is apt to react during storage as it has a large number of reactive sites. Therefore, when storage stability is taken into consideration, it is preferred that the amount of this polyfunctional organic silicon compound should be as small as possible.

The above organic silicon compounds may be used alone or in combination of two or more. As described above, when storage stability is taken into consideration, it is preferred to use at least one organic silicon compound selected from γ-glycidoxypropyl trimethoxysilane, γ-glycidoxypropyl triethoxysilane, γ-glycidoxypropyl methyldimethoxysilane and γ-glycidoxypropyl methyldiethoxysilane (all of these organic silicon compounds may be simply referred to as "reactive organic silicon compounds" hereinafter) all of which are organic silicon compounds containing an γ-glycidoxy group listed as the organic silicon compounds which further improve adhesion to a plastic optical substrate and crosslinkability.

As described above, it is preferred to use γ-aminopropyl trimethoxysilane, γ-aminopropyl triethoxysilane, N-phenyl-γ-aminopropyl trimethoxysilane, N-2(aminoethyl)3-aminopropyl triethoxysilane, N-2(aminoethyl)3-aminopropyl trimethoxysilane and N-2(aminoethyl)3-aminopropyl methyldimethoxysilane all of which are organic silicon compounds containing an amino group listed as the organic silicon compounds which further improve the weather-resistance adhesion of a hard coat film to a plastic optical substrate.

In the present invention, in order to further improve the storage stability of the coating composition itself and the weather-resistance adhesion of the hard coat film to a plastic optical substrate, a combination of a reactive organic silicon compound and an organic silicon compound containing an amino group is most preferably used.

### <amount of hydrolyzable group-containing organic silicon compound (B)>

In the present invention, the amount of the hydrolyzable group-containing organic silicon compound (B) is preferably 40 to 80 parts by mass based on 100 parts by mass of the total of the component (A) and the component (B). The amount of the component (B) is the amount of the hydrolyzable group-containing organic silicon compound which is not hydrolyzed.

When different types of the above components (A), for example, a plurality of the components (A1) and a plurality of the components (A2) are used, the total amount of these components becomes the amount of the above component (A). Similarly, when different types of the above components (B), for example, an organic silicon compound which further improves the adhesion of the obtained hard coat film and crosslinkability and an organic silicon compound which makes the hard coat film dense and further improves the scratch resistance of a plastic optical substrate are used, the total amount of these organic silicon compounds becomes the amount of the component (B).

When the amount of the component (B) falls within the above specified range, the heat resistance and flexibility of the obtained hard coat film become satisfactory and the hard coat film itself is easily formed and has high durability. When the heat resistance and flexibility of the obtained hard coat film are taken into consideration, the amount of the component (B) is particularly preferably 55 to 65 parts by mass based on 100 parts by mass of the total of the component (A) and the component (B).

When the reactive organic silicon compound and the organic silicon compound containing an amino group are used in combination as the component (B), the amount of the organic silicon compound containing an amino group is preferably 0.1 to 2 parts by mass.

### <water or acid aqueous solution (C)>

In the coating composition of the present invention, the component (B) is hydrolyzed, and the hydrolyzed product thereof is polymerized and cured (polycondensed) while it incorporates the component (A) to form a cured body (hard coat film) which will become a matrix, thereby forming a hard coat film in which the above component (A) is dispersed in the matrix densely. Water or an acid aqueous solution is required to promote the hydrolysis of the component (B) so as to form this cured body.

The amount of this water or acid aqueous solution (C) is 1 to 90 parts by mass, preferably 5 to 75 parts by mass, more preferably 15 to 65 parts by mass based on 100 parts by mass of the total of the component (A) and the component (B) so as to carry out the hydrolysis of the component (B) efficiently. That is, when the amount of the component (C) is small, the hydrolysis of the hydrolyzable group-containing organic silicon compound (B) does not proceed fully, whereby the scratch resistance of the obtained hard coat film and the storage stability of the obtained coating composition may deteriorate. When the amount of the component (C) is too large, it is difficult to form a hard coat film having uniform thickness, which may affect the appearance of the hard coat film. The amount of the component (C) is based on the state of the component (B) which is not hydrolyzed.

As described above, the component (A) is preferably used in the form of a water dispersion (sol). In this case, the amount of the component (C) includes the amount of water used in this dispersion. For example, when the amount of water contained in the dispersion (including the acid aqueous solution) at the time of using the component (A) falls within the range specified for the component (C), water (acid aqueous solution) does not need to be added to the coating composition. When the amount of the component (C) does not fall within the above range, it is preferred to add water.

When the acid aqueous solution is used in the present invention, the hydrolysis of the above component (B) can be further promoted. The amount of the acid aqueous solution is the same as the amount of the component (C). Examples of the acid component of the acid aqueous solution include inorganic acids such as hydrochloric acid, sulfuric acid, nitric acid and phosphoric acid and organic acids such as acetic acid and propionic acid. From the viewpoints of the storage stability of the coating composition and hydrolyzability, hydrochloric acid and acetic acid out of these are preferably used. The concentration of the acid aqueous solution is preferably 0.001 to 0.5 N, particularly preferably 0.01 to 0.1 N.

### <curing catalyst (D)>

The curing catalyst (D) in the coating composition of the present invention is used to promote the condensation (polymerization and curing) of the hydrolyzed product of the component (B). Examples of the curing catalyst include acetylacetonate complexes, perchlorates, organic metal salts and Lewis acids. These curing catalysts may be used alone or in combination of two or more. By using the curing catalyst, the hard coat film can be made harder. By using an acetylacetonate complex out of these, the scratch resistance of the obtained hard coat film can be further improved.

The acetylacetonate complexes include aluminum acetylacetonate, lithium acetylacetonate, indium acetylacetonate, chromium acetylacetonate, nickel acetyacetonate, titanium acetylacetonate, iron acetylacetonate, zinc acetylacetonate, cobalt acetylacetonate, copper acetylacetonate and zirconium acetylacetonate. Out of these, aluminum acetylacetonate and titanium acetylacetonate are preferred.

The perchlorates include magnesium perchlorate, aluminum perchlorate, zinc perchlorate and ammonium perchlorate.

The organic metal salts include sodium acetate, zinc naphthenate, cobalt naphthenate and zinc octylate.

The Lewis acids include stannic chloride, aluminum chloride, ferric chloride, titanium chloride, zinc chloride and antimony chloride.

In the present invention, an acetylacetonate complex is preferably used as the curing catalyst because a hard coat film having high scratch resistance can be obtained in a short time even at a relatively low temperature, the storage stability of the coating composition becomes high, and the balance of adhesion is good.

According to the type of the component (B) in use, the scratch resistance of the obtained hard coat film may be improved by using a combination of an acetylacetonate complex and a perchlorate. When an acetylacetonate complex and a perchlorate are used in combination, the amount of the perchlorate is preferably 0.1 to 20 parts by mass, more preferably 5 to 10 parts by mass based on 100 parts by mass of the acetylacetonate complex so as to further improve the scratch resistance of the obtained hard coat film.

The curing catalyst (D) is used in an amount of preferably 0.1 to 5 parts by mass, particularly preferably 2.0 to 4.0 parts by mass based on 100 parts by mass of the total of the component (A) and the component (B) so as to obtain a hard coat film having high hardness . The amount of the above curing catalyst is based on the state of the component (B) which is not hydrolyzed. When different types of the above curing catalysts are used, the total amount of these curing catalysts is the amount of the component (D).

### <organic solvent (E)>

In the coating composition of the present invention, the organic solvent (E) is a solvent for the component (B) and a dispersion medium for the component (A). As the organic solvent (E), a known organic solvent having volatility may be used. The organic solvent (E) does not include an aromatic alcohol (F) as will be described hereinafter. The organic solvent (E) is distinguished from the aromatic alcohol (F) in the present invention.

Examples of the organic solvent (E) include aliphatic alcohols such as methanol, ethanol, propanol, isopropanol, n-butanol, 2-butanol, t-butanol and diacetone alcohol; lower carboxylic acid esters such as methyl acetate; ethers such as dioxane, ethylene glycol monoisopropyl ether, ethylene glycol monomethyl ether, ethylene glycol monoethyl ether, propylene glycol monomethyl ether and propylene glycol monoethyl ether; ketones such as acetone, methyl ethyl ketone and acetyl acetone; halogenated hydrocarbons such as methylene chloride and chloroform; and aromatic hydrocarbons such as benzene, toluene and xylene. These organic solvents may be used alone or in combination of two or more.

Out of these organic solvents (E), it is preferred to use at least one selected from methanol, ethanol, propanol, isopropanol and t-butanol all of which are aliphatic alcohols having a boiling point of not higher than 100°C (Ea), ethylene glycol monoisopropyl ether, ethylene glycol monomethyl ether, ethylene glycol monoethyl ether, ethylene glycol monoisopropyl ether, propylene glycol monomethyl ether, propylene glycol monomethyl ether and propylene glycol monoethyl ether all of which are cellosolve-based alcohols having a boiling point of not lower than 100°C (Eb), and diacetone alcohol, methyl acetoacetate, ethyl acetoacetate and ethyl lactate all of which are high-boiling point solvents having a boiling point of not lower than 150°C (Ec) since high storage stability is obtained, the organic solvent is easily evaporated, and a smooth hard coat film is formed to obtain a good appearance when the coating agent is applied and cured. Part of the organic solvent may be mixed with the above component (A) in advance as a dispersion medium for the component (A) as described above.

The amount of the component (E) is preferably 50 to 500 parts by mass, more preferably 100 to 230 parts based on 100 parts by mass of the total of the component (A) and the component (B) so as to obtain high storage stability and a good appearance. Further, when the components (Ea), (Eb) and (Ec) are used in combination, the amounts of these components are preferably 70 to 200 parts by mass, 10 to 50 parts by mass and 10 to 100 parts by mass, more preferably 90 to 160 parts by mass, 15 to 35 parts by mass and 30 to 70 parts by mass, respectively.

Methanol and t-butanol are preferably used in combination as the components (Ea) and the ratio of methanol to t-butanol is preferably 1.2 to 2.2 from the viewpoints of wettability and adhesion to a plastic optical substrate and the storage stability of the coating composition.

The amount of the component (E) is based on the state of the hydrolyzable group-containing organic silicon compound (B) which is not hydrolyzed. The amount of the component (E) does not include the amount of an alcohol produced from the component (B) by hydrolysis.

The coating composition of the present invention comprises the above components. The coating composition preferably comprises the following components to improve the adhesion, specifically weather-resistant adhesion of the obtained hard coat film.

### <aromatic alcohol (F)>

It is preferred that the coating composition of the present invention should comprise (F) an aromatic alcohol in addition to the above components (A) to (E). The component (F) is a compound which contains at least one aromatic ring and at least one hydroxyl group in the molecule and is used to enhance the adhesion of the hard coat film to a plastic lens.

In the present invention, since the component (F) has high affinity for a plastic forming a substrate on which the hard coat film is to be formed, the component (F) has the function of swelling the surface of a plastic optical substrate at the time of curing with the result that adhesion between the obtained hard coat film and the plastic optical substrate is greatly enhanced. In the present invention, a hard coat film having more excellent weather-resistance adhesion is formed by combining the weather-resistance adhesion improving effect of the inorganic oxide fine particles (A) and the adhesion improving effect of the aromatic alcohol (F).

Although the component (F) is not particularly limited if it is uniformly mixed with the above-mentioned organic solvent (E), the boiling point of the component (F) is preferably 100 to 300°C, more preferably 160 to 240°C, most preferably 200 to 210°C from the viewpoint of remaining in the hard coat film. When the boiling point of the component (F) is lower than 100°C, it evaporates before it permeates into a plastic substrate at the time of drying and heating to cure it after the coating composition of the present invention is applied to the plastic substrate. Therefore, the adhesion improving effect of the component (F) tends to become low. When the boiling point of the component (F) is higher than 300°C, the amount of the component (F) remaining in the finally obtained hard coat film becomes large, whereby film hardness (scratch resistance) tends to deteriorate.

Examples of the component (F) include 4-methoxybenzyl alcohol, 4-isopropylbenzyl alcohol, α,α,4-trimethylbenzene methanol, 2-methyl-3-phenylpropanol, 3-phenylpropanol, 2,4-dimethylbenzyl alcohol, 1-phenyl-2-methyl-2-propanol, 1-(4-methylphenyl)ethanol, 2-ethoxybenzyl alcohol, 4-ethoxybenzyl alcohol, furfuryl alcohol, 2-phenylpropanol, 4-methyl-1-phenyl-2-pentanol, 2-methoxybenzyl alcohol, 3-(4-methoxyphenyl)propanol, 4-methyl-2-phenylpentanol, 2-methyl-4-phenyl-2-butanol, 4-methylbenzyl alcohol, 5-methylfufuryl alcohol, phenethyl alcohol, 3-methyl-1-phenyl-3-pentanol, 2-phenoxyethanol, 1-phenylpropanol, 2-phenyl-2-propanol, 4-phenylbutan-2-ol, piperonyl alcohol, 1-phenylethanol, 2-(4-methyl-5-thiazolyl)ethanol, 2-thienyl methanol, 3,4-dimethoxybenzyl alcohol, 2,3-dimethoxybenzyl alcohol, 4-phenyl-3-buten-2-ol, 1-phenyl-2-pentanol, benzyl alcohol, 2-hydroxybenzyl alcohol, 3-hydroxybenzyl alcohol, 4-nitrophenyl ethanol, 3-chlorobenzyl alcohol, 3,4-dichlorobenzyl alcohol, 2,3,5,6-tetrafluorophenyl ethanol, 3-methoxybenzyl alcohol, 3-phenoxybenzyl alcohol, 2-chlorobenzyl alcohol, o-chlorobenzyl alcohol, isopropylbenzyl alcohol and 3,4,5-trimethoxybenzyl alcohol.

Out of these, benzyl alcohol, phenethyl alcohol, furfuryl alcohol, 2-phenyl-2-propaanol, 1-phenyl-2-methyl-2-propanol and 4-methylbenzyl alcohol are preferably used as they have high affinity for plastic optical substrates and greatly improve adhesion between the hard coat film and the plastic optical substrate. Out of these, benzyl alcohol is most preferably used.

As understood from the above explanation, the component (F) has a high boiling point and is used to be partially permeated into a plastic optical substrate but not used as an ordinary organic solvent.

The amount of the component (F) is smaller than that of the organic solvent which is used as a dispersion medium. Stated specifically, it is preferably 3 to 100 parts by mass, more preferably 9 to 60 parts by mass, most preferably 20 to 45 parts by mass based on 100 parts by mass of the total of the component (A) and the component (B). The amount of the component (F) is based on the state of the component (B) which is not hydrolyzed.

When the amount of the component (F) is larger than 100 parts by mass, scratch resistance tends to deteriorate. When the amount of the component (F) is smaller than 3 parts by mass, adhesion between the hard coat film and the plastic optical substrate tends to lower.

As described above, in the present invention, the component (F) is distinguished from the component (E) which is a dispersion medium. Therefore, to satisfy the above specified range and ensure that the formed hard coat film retains excellent scratch resistance, the amount of the component (F) is preferably not more than 50 parts by mass, more preferably not more than 20 parts by mass based on 100 parts by mass of total of the component (C) and the component (E) .

### <other additives>

The coating composition of the present invention may be mixed with known additives optionally in addition to the above components.

The coating composition of the present invention may be mixed with additives known per se optionally as long as the object of the present invention is not impaired. The additives include a surfactant, antioxidant, radical scavenger, ultraviolet stabilizer, ultraviolet absorbent, release agent, coloration preventing agent, antistatic agent, fluorescent dye, dye, pigment, fragrance and plasticizer.

As the surfactant, nonionic, anionic and cationic surfactants may be used. A nonionic surfactant is preferably used from the viewpoint of wettability to a plastic lens substrate. Preferred examples of the nonionic surfactant include polyether-modified silicones, sorbitan fatty acid esters, glycerin fatty acid esters, decaglycerin fatty acid esters, propylene glycol·pentaerythritol fatty acid esters, polyoxyethylene sorbitan fatty acid esters, polyoxyethylene sorbit fatty acid esters, polyoxyethylene glycerin fatty acid esters, polyethylene glycol fatty acid esters, polyoxyethylene alkyl ethers, polyoxyethylene phytosterol ·phytostanol, polyoxyethylene polyoxypropylene alkyl ethers, polyoxyethylene alkyl phenyl ethers, polyoxyethylene castor oil·hardened castor oil, polyoxyethylene lanolin·lanolin alcohol·beeswax derivatives, polyoxyethylene alkylamine· fatty acid amides, polyoxyethylene alkyl phenyl formaldehyde condensates and homogeneous polyoxyethylene alkyl ethers.

Two or more surfactants may be mixed together before use. The amount of the surfactant is preferably 0.001 to 1 part by mass based on 100 parts by mass of the total of the component (A) and the component (B).

Hindered phenol antioxidants, phenol-based radical scavengers, sulfur-based antioxidants, benzotriazole-based compounds and benzophenone-based compounds may be preferably used as the antioxidant, radical scavenger, ultraviolet stabilizer and ultraviolet absorbent, respectively. The amount of each of these agents is preferably 0.1 to 20 parts by mass based on 100 parts by mass of the total of the component (A) and the component (B).

The dye and the pigment are used for coloration. Examples thereof include nitroso dyes, nitro dyes, azo dyes, stilbenzoazo dyes, ketoimine dyes, triphenylmethane dyes, xanthene dyes, acridine dyes, quinoline dyes, methine dyes, polymethine dyes, thiazole dyes, indamine dyes, indophenol dyes, azine dyes, oxazine dyes, thiazine dyes, sulfide dyes, aminoketone dyes, oxyketone dyes, anthraquinone dyes, perinone-based dyes, indigoid dyes, phthalocyanine dyes, azo-based pigments, anthraquinone-based pigments, phthalocyanine-based pigments, naphthalocyanine-based pigments, Quinacridone-based pigments, dioxazine-based pigments, indigoid-based pigments, triphenylmethane-based pigments and xanthene-based pigments. Use of the dye or the pigment is suitably determined according to the color density of the substrate to be colored.

### <preparation of coating composition>

In the present invention, a coating agent comprising the above coating composition is prepared, applied to the surface of a plastic optical substrate such as a plastic lens, dried and cured to form a hard coat film. In the present invention, the coating agent obtained from the coating composition can be produced by weighing and mixing together predetermined amounts of the components. As for the mixing of the components, for example, all the components may be mixed together at the same time. Alternatively, after the component (C) is added to the component (B) to hydrolyze the component (B), the component (A) may be mixed with the resulting mixture. From the viewpoint of the dispersion stability of the component (A), the latter method is preferred.

To mix the component (D), the component (E) and the component (F) which is optionally added, all these components and the components (A), (B) and (C) may be mixed together at the same time. Alternatively, after the component (E) and the component (F) are mixed with the component (B), the component (C) is mixed to hydrolyze the component (B) and then the component (A) and the component (D) are added to and mixed with the resulting mixture. Out of these, the latter method is preferred.

When an acetylacetonate complex and a perchlorate are used in combination as the component (D), the following mixing method is preferably adopted. That is, it is preferred that the acetylacetonate complex should be first mixed with the component (B) and then with the component (A) and finally with the perchlorate. Although this reason is not known, it is assumed that, by mixing the acetylacetonate complex and then the perchlorate, the condensation reaction of the component (B) is easily completed, thereby improving the scratch resistance of the obtained hard coat film. Describing this mixing method in more detail, the component (B), the component (E) and the component (F) are first mixed together. Then, after the obtained mixture is mixed with the component (C), the acetylacetonate complex is mixed with the resulting mixture. Then, the component (A1) and the component (A2) are mixed with the mixture and the perchlorate is finally mixed with the resulting mixture. By adopting this method, a coating composition (coating agent) which develops an excellent effect is obtained.

It is preferred that the above hydrolysis (the component (B) is hydrolyzed by mixing the component (B) with the component (C)) should be carried out at a temperature of 10 to 40°C so as to eliminate an adverse effect on the physical properties of the hard coat film and prevent the deterioration of storage stability.

Although the coating agent obtained by mixing as described above is not particularly limited, the total solid content concentration of the component (A) and the hydrolyzed product of the component (B) is preferably 15 to 50 mass%, particularly preferably 15 to 35 mass% based on the total mass of the coating agent.

### <plastic optical substrate>

The coating composition of the present invention is used to form a hard coat film on the surface of a plastic optical substrate such as spectacle lens, camera lens, liquid crystal display or the window of a house or automobile. Particularly, it is advantageously used for spectacle lenses. The coating composition may be used to form a hard coat film on the surface of an optical substrate made of a known resin such as (meth)acrylic resin, polycarbonate resin, allyl resin, thiourethane resin, urethane resin or thioepoxy resin as the plastic forming the optical substrate. The coating composition of the present invention can be advantageously used to form a hard coat film on the surface of an optical substrate made of a thiourethane resin having a refractive index of not less than 1.59 and a glass transition temperature of not higher than 125°C. Further, the coating composition of the present invention can also be advantageously used to form a hard coat film on the surface of an optical substrate made of a thiourethane resin having a refractive index of not less than 1.65 and a glass transition temperature of not higher than 105°C. The coating composition of the present invention can improve the adhesion, especially weather-resistant adhesion of an optical substrate made of a thiourethane resin having a refractive index of not less than 1.65 and a glass transition temperature of not higher than 105°C better than that of the prior art.

The inventors of the present invention consider the reason that the coating composition of the present invention can also be advantageously used for a thiourethane resin having a refractive index of not less than 1.65 and a glass transition temperature of not higher than 105°C as follows. It is considered that when a resin having a refractive index of 1.67 is compared with a resin having a refractive index of 1.60, photodegradation at the interface between a hard coat film and an optical substrate is apt to proceed due to the differences of additives, whereby weather-resistance adhesion tends to deteriorate. Since the coating composition of the present invention comprises the inorganic oxide fine particles (A) containing zirconium oxide as the main component and further cerium oxide, it easily cuts off ultraviolet light reaching the interface. As a result, photodegradation is suppressed, and it is therefore considered that even a substrate having a refractive index of 1.67 exhibits excellent weather-resistance adhesion. It is also considered that, by using only the reactive organic silicon compound and further using a combination of an acetylacetonate complex and a perchlorate, a hard coat film having high adhesion while having excellent scratch resistance can be formed, whereby weather-resistant adhesion is further improved.

The coating agent obtained from the coating composition of the present invention can be advantageously used for plastic substrates containing a photochromic compound and dyed lenses.

### <method of producing an optical article, optical article>

After the coating agent produced as described above is filtered to remove foreign matter as required, it is applied to the surface of a plastic optical substrate such as a plastic lens, dried and cured to form a hard coat film. The above optical substrate is used as this plastic optical substrate.

To apply the coating agent, a known coating method such as dipping, spin coating, dip spin coating, spraying, brush coating or roller coating may be employed. Drying after the application of the coating agent is suitably carried out under conditions under which the solvent contained in the coating agent can be removed. Curing after drying is carried out until the formed coating layer has sufficiently high strength. For example, to laminate a hard coat film having a good appearance by preventing abrupt shrinkage, precuring is first carried out at 50 to 80°C for 5 to 30 minutes and then curing is carried out at 90 to 120°C for 1 to 3 hours though these conditions differ according to the substrate. Since the coating agent obtained from the coating composition of the present invention exhibits excellent adhesion, the temperature after precuring can be made relatively low. Stated more specifically, the temperature after precuring can be set to 95 to 115°C, further 100 to 110°C. Since curing can be carried out at a relatively low temperature, it is possible to prevent the yellowing and thermal deformation of the plastic lens.

To apply the above coating agent, the dipping method which is carried out by fixing the optical substrate such as a plastic lens to a fixing jig is preferably employed. When the coating agent is applied by the dipping method and coatability to the optical substrate such as a plastic lens is taken into consideration, the viscosity of the component to be applied is preferably set to not more than 3.0 mPa· s (25°C).

The viscosity of the above coating agent may become not less than 3.0 mPa·s (25°C) according to the component which is selected in consideration of adhesion and weather-resistant adhesion to the optical substrate such as a plastic lens with the result that an appearance defect may be produced at the fixing positions of the fixing jig. Even in this case, the coating agent can be applied to obtain a good appearance by using the fixing jig shown in Fig. 1.

In general, in the case of the dipping method using a circular plastic lens, the lens is dipped vertically by fixing the periphery of the lens with the fixing jig. In the present invention, when coating for obtaining a good appearance is taken into consideration, as shown in Fig. 1, preferably, a lens fixing jig (2) having three fixing arms (4) is used to fix the lower end part (3) of the lens at one location when seen from the surface of a dip solution and the other part at two locations (5) above the center of the lens so as to release an excessive solution after dipping into a dip tank. In this case, the above two locations are preferably fixed with arms (4) extending downward (in a truncated chevron shape when seen from the front of the lens) toward the surface of the dip solution when seen from the lens fixing position. The fixing jig having this shape has a spring function as a whole and can fix the lens by this spring function. The solution adhered to the arms does not flow over the surface of the lens but flows to the outside of the lens along the arms, thereby making it possible to form a hard coat film having a good appearance. The lens fixing jig shown in Fig. 1 in particular is effective for a plus power lens and minus power lens both having an edge part with a lens thickness of less than 3.0 mm.

To suppress the drying of the coating agent adhered to the fixing jig, it is preferred that clean air convection supplied into a coating device should be suppressed at the time of dipping. Although a current of air having a velocity of 1.0 to 0.5 m/sec is generally supplied, after the lens is lifted from the dip tank, the current preferably has a velocity of not more than 0.1 m/sec, more preferably a windless state.

The hard coat film formed as described above should have a thickness of 0.1 to 10 µm, preferably 1 to 5 µm for spectacle lenses. By employing the above method, an optical article having the hard coat film on a plastic optical substrate can be obtained.

The coating composition of the present invention is capable of not only providing a hard coat film having excellent scratch resistance but also preventing an appearance defect caused by photodegradation, such as the cracking or peeling of the hard coat film, when it is used for a long time. Further, the cracking of the hard coat film caused by thermal history at the time of curing, more specifically, the cracking of the hard coat film caused by the shrinkage of the hard coat film and the swelling of the plastic optical substrate can be prevented. Since the hard coat film also has hot water resistance, cracking can be prevented and the deterioration of adhesion can be improved even when it is brought into contact with hot water.

### EXAMPLES

The following examples are provided for the purpose of further illustrating the present invention but are in no way to be taken as limiting. Plastic optical substrates (lens substrates) and components used in the examples are given below.

### (1) plastic optical substrates (lens substrates)

MRA: thiourethane-based resin plastic lens, refractive index of 1.60, glass transition temperature of 115°C
MRB: thiourethane-based resin plastic lens, refractive index of 1.67, glass transition temperature of 86°C
MRC: thiourethane-based resin plastic lens, refractive index of 1.67, glass transition temperature of 103°C
TRA: thiourethane-based resin plastic lens, refractive index of 1.60, glass transition temperature of 97°C
TRC: thioepoxy-based resin plastic lens, refractive index of 1.74, glass transition temperature of 80°C
TRD: thioepoxy-based resin plastic lens, refractive index of 1.71, glass transition temperature of 105°C
TRE: urethane-based resin plastic lens, refractive index of 1.56, glass transition temperature of 85°C

The above glass transition temperatures were values measured by using DSC in accordance with a testing method specified in JIS K7121.
CR: allyl-based resin plastic lens, refractive index of 1.50 TRB: urethane-based resin plastic lens, refractive index of 1.53
PC1: lens having a coating layer made of a methacrylic resin on the surface of a plastic lens substrate (photochromic optical substrate)

### {production method of PC1 photochromic optical substrate produced by coating method}

### (preparation of photochromic polymerization curable composition)

40 parts by mass of 2,2-bis(4-acryloyloxypolyethylene glycol phenyl)propane having an average molecular weight of 776, 15 parts by mass of polyethylene glycol diacrylate (average molecular weight of 532), 25 parts by mass of trimethylolpropane trimethacrylate, 10 parts by mass of polyester oligomer hexaacrylate and 10 parts by mass of glycidyl methacrylate all of which are radially polymerizable monomers were mixed together. Then, 3 parts by mass of a photochromic compound (refer to the formula below) was added to 100 parts by mass of a mixture of these radically polymerizable monomers to be dissolved by ultrasonic waves at 70°C for 30 minutes. Thereafter, 0.35 part by mass of a mixture of CGI1870:1-hydroxycylohexylphenyl ketone and bis(2,6-dimethoxybenzoyl)-2,4,4-trimethyl-pentylphosphine oxide (weight ratio of 3:7) as a polymerization initiator, 5 parts by mass of bis(1,2,2,6,6-pentamethyl-4-piperidyl)sebacate and 3 parts by mass of triethylene glycol-bis[3-(3-t-butyl-5-methyl-4-hydroxyphenyl) propionate as stabilizers, 7 parts by mass of γ-methacryloyloxypropyl trimethoxysilane as a silane coupling agent and 0.1 part by mass of the L-7001 silicone-based surfactant of Dow Corning Toray Co., Ltd. as a leveling agent were added to and fully mixed with the obtained composition to prepare a photochromic polymerization curable composition.

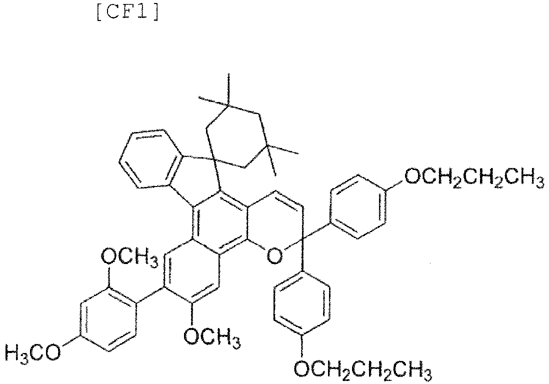

### Photochromic compound 1

### (preparation of plastic optical substrate: lamination of primer layer)

MRA (thiourethane-based resin plastic lens, refractive index of 1.60) was used as a plastic optical substrate, fully degreased with acetone, treated with a 50°C 5 % sodium hydroxide aqueous solution for 4 minutes, rinsed with running water for 4 minutes, washed with 40°C distilled water for 4 minutes and dried at 70°C. Then, 50 parts by mass of the TAKESEAL PFR402TP-4 which is a moisture-curable primer manufactured by Takebayashi Chemical Industry Co., Ltd. and 50 parts by mass of ethyl acetate were mixed together, and 0.03 part by mass of the FZ-2104 which is a leveling agent manufactured by Dow Corning Toray Co., Ltd. was added to the obtained mixed solution and fully stirred in a nitrogen atmosphere until a homogeneous, and resultant solution was used as a primer coating solution. This primer solution was applied to the surface of the MRA lens by using the 1H-DX2 spin coater of MIKASA Corporation. This lens was left at room temperature for 15 minutes to manufacture a lens substrate having a primer layer with a thickness of 7 µm.

### (lamination of photochromic coating layer on lens substrate having primer layer)

Then, about 1 g of the above-described photochromic polymerization curable composition was spin coated on the surface of the above lens substrate having a primer layer. The lens having a coating film of the above photochromic polymerization curable composition on the surface was exposed to light by using the F3000SQ having a D valve which was manufactured by Fusion UV Systems Japan K.K. and whose output was adjusted to 150 mW/cm² at 405 nm on the lens surface in a nitrogen gas atmosphere for 3 minutes to cure the coating film. Thereafter, the lens was heated in a 110°C thermostat for 1 hour to form a photochromic coat layer. The thickness of the obtained photochromic coat layer can be adjusted by spin coating conditions. The thickness of the photochromic coat layer was adjusted to 40±1 µm. The lens substrate PC1 was thus manufactured.

### (2) components for coating agent (coating composition) [inorganic oxide fine particles (A)]

A1(1): methanol dispersion sol of zirconium oxide, solid content concentration (concentration of zirconium oxide fine particles) of 30 mass%, primary particle diameter of 3 to 5 nm
A1(2): methanol dispersion sol of zirconium oxide, solid content concentration (concentration of zirconium oxide fine particles) of 30 mass%, primary particle diameter of 17 to 19 nm
A1(3) : methanol dispersion sol of antimony pentoxide, solid content concentration (concentration of antimony pentoxide fine particles) of 30 mass%
A1(4) : methanol dispersion sol of composite inorganic oxide fine particles containing 83 mass% of tin oxide, 12 mass% of zirconium oxide, 2 mass% of antimony pentoxide and 3 mass% of silicon dioxide, solid content concentration (concentration of composite inorganic oxide fine particles) of 40.5 mass%
A2: water dispersion cerium oxide fine particles (Needral U-15 of Taki Chemical Co., Ltd.), solid content concentration (concentration of cerium oxide fine particles) of 15 mass% (containing 2 mass% of acetic acid and 83 mass% of water)

### (hydrolyzable group-containing organic silicon compound (B))

BSE: 1,2-bis(triethoxysilyl)ethane
GTS: γ-glycidoxypropyl trimethoxysilane
GDS: γ-glycidoxypropyl methyldimethoxysilane
TEOS: tetraethoxysilane
ATM: γ-aminopropyl trimethoxysilane

### (water or acid aqueous solution (C))

C1: 0.05 N hydrochloric acid aqueous solution
C2: acetic acid
C3: distilled water

### (curing catalyst (D))

### (acetylacetonate complex)

D1: tris(2,4-pentanedionato)aluminum (III) (perchlorate)
D2: ammonium perchlorate

### [organic solvent (E)]

(Ea) aliphatic alcohol having a boiling point of not higher than 100°C
E1: methanol
E2: t-butanol
(Eb) cellosolve-based alcohol having a boiling point of not lower than 100°C
E4: propylene glycol monomethyl ether
(Ec) high-boiling point solvent having a boiling point of not lower than 150°C
E3: diacetone alcohol

### [aromatic alcohol (F)]

F1: benzyl alcohol

### Production Examples of Coating Agent

### [production of coating agent 1]

54.0 parts by mass of GTS as the hydrolyzable group-containing organic silicon compound (B), 23.0 parts by mass of E2 and 75.5 parts by mass of E3 as the organic solvents (E), 42.3 parts by mass of F1 as the aromatic alcohol (F) and 0.21 part by mass of a silicone-based surfactant (L7001 of Dow Corning Toray Co., Ltd.) were added and mixed together under agitation. 17.5 parts by mass of C1 and 11.0 parts by mass of C3 as the water or acid aqueous solution (C) were added to the obtained solution carefully under agitation to ensure that the temperature of the solution did not exceed 30°C and kept stirred for 20 hours after the end of addition. Thereafter, 4.2 parts by mass of D1 as the curing catalyst (D) was added to and mixed with the solution under agitation for 1 hour. Then, 127.1 parts by mass of A1(1) as the inorganic oxide fine particles (A) (first inorganic oxide fine particles; 38.1 parts by mass of zirconium oxide fine particles, organic solvent (E); 89.0 parts by mass of methanol (E1)) was added to and mixed with the resulting solution under agitation at room temperature for 15 minutes.

Then, 52.3 parts by mass of A2 as the inorganic oxide fine particles (A) (7.9 parts by mass of cerium oxide fine particles, 44.4 parts by mass of water) was added to and mixed with the resulting solution under agitation at room temperature for 24 hours . 0.3 part by mass of D2 as the curing catalyst (D) was added to and mixed with this solution under agitation for 2 hours to obtain a coating agent 1 (coating composition).

### [production of coating agents 2 to 36]

Coating agents were produced in the same manner as the coating agent 1 except that inorganic oxide fine particles (A), hydrolyzable group-containing organic silicon compounds (B), water or acid aqueous solutions (C), curing catalysts (D), organic solvents (E) and aromatic alcohols (F) shown in Table 1, Table 2 and Table 3 were used. The compositions of the formulations are shown in Tables 1, 2 and 3. The coating agents 2 to 19 shown in Table 1 and the coating agents 26 to 36 shown in Table 3 were used in Examples 2 to 123, and the coating agents 20 to 25 shown in Table 2 were used in Comparative Examples 1 to 7, respectively.

### [Table 1]

**Table 1**

| Coating agent | Comp.A pbm | Comp.B pbm | Comp.C pbm | Comp.D pbm | Comp.E pbm | Comp.F pbm |
|---|---|---|---|---|---|---|
| 1 | A1(1)/A2 | GTS | C1/C3 | D1/D2 | E1/E2/E3 | F1 |
| | 38.1/7.9 | 54.0 | 17.5/55.4 | 4.2/0.3 | 89.0/23.0/75.5 | 42.3 |
| 2 | A1(1)/A2 | GTS | C1/C3 | D1/D2 | E1/E2/E3 | F1 |
| | 46.8/5.2 | 48.0 | 15.6/39.2 | 3.8/0.3 | 109.1/20.4/67.1 | 37.6 |
| 3 | A1(2)/A2 | GTS | C1/C3 | D1/D2 | E1/E2/E3 | F1 |
| | 46.8/5.2 | 48.0 | 15.6/39.2 | 3.8/0.3 | 109.1/20.4/67.1 | 37.6 |
| 4 | A1(1)/A2 | GTS | C1/C3 | D1 | E1/E2/E3 | F1 |
| | 46.8/5.2 | 48.0 | 15.6/39.2 | 3.8 | 109.1/20.4/67.1 | 37.6 |
| 5 | A1(1)/A2 | GTS | C1/C3 | D1/D2 | E1/E2/E3 | F1 |
| | 41.6/10.4 | 48.0 | 15.6/68.7 | 3.8/0.3 | 97.0/20.4/67.1 | 37.6 |
| 6 | A1(1)/A2 | GTS | C1/C3 | D1/D2 | E1/E2/E3 | F1 |
| | 46.8/5.2 | 48.0 | 15.6/39.2 | 3.8/0.1 | 109.1/20.4/67.1 | 37.6 |
| 7 | A1(1)/A2 | GTS | C1/C3 | D1/D2 | E1/E2/E3 | F1 |
| | 46.8/5.2 | 48.0 | 15.6/39.2 | 3.8/0.2 | 109.1/20.4/67.1 | 37.6 |
| 8 | A1(1)/A2 | GTS | C1/C3 | D1/D2 | E1/E2/E3 | F1 |
| | 44.3/2.6 | 53.1 | 13.8/25.7 | 4.1/0.3 | 103.3/28.0/92.1 | 43.6 |
| 9 | A1(1)/A2 | GTS | C1/C3 | D1/D2 | E1/E2/E3 | F1 |
| | 41.8/5.2 | 53.0 | 17.7/40.8 | 4.2/0.3 | 97.4/23.2/76.3 | 42.7 |
| 10 | A1(1)/A2 | GTS | C1/C3 | D1/D2 | E1/E2/E3 | F1 |
| | 39.1/7.8 | 53.1 | 17.7/55.4 | 4.2/0.3 | 91.2/23.2/76.4 | 42.8 |

| CoA | Comp. A pbm | Comp. B pbm | Comp. C pbm | Comp. D pbm | Comp. E pbm | Comp. F pbm |
|---|---|---|---|---|---|---|
| 11 | A1(1)/A2 | GTS | C1/C3 | D1/D2 | E1/E2/E3 | F1 |
| | 36.5/10.4 | 53.1 | 17.7/70.2 | 4.2/0.3 | 85.2/23.2/76.3 | 42.8 |
| 12 | A1(1)/A2 | GTS | C1/C3 | D1/D2 | E1/E2/E3 | F1 |
| | 32.9/13.1 | 54.0 | 18.1/85.3 | 4.2/0.3 | 76.8/23.6/77.8 | 43.6 |
| 13 | A1(1)/A2 | GTS | C1/C3 | D1/D2 | E1/E2/E3 | F1 |
| | 31.3/15.6 | 53.1 | 14.5/88.7 | 4.1/0.3 | 72.9/20.4/67.2 | 42.8 |
| 14 | A1(1)/A2 | GTS | C1/C3 | D1/D2 | E1/E2/E3 | F1 |
| | 26.0/20.9 | 53.1 | 13.2/118.2 | 4.1/0.3 | 60.7/16.4/53.8 | 42.4 |
| 15 | A1(1)/A2 | GTS | C1/C3 | D1/D2 | E1/E2/E3 | F1 |
| | 40.7/5.2 | 54.1 | 17.5/40.6 | 4.2/0.3 | 95.1/23.0/75.5 | 42.3 |
| 16 | A1(1)/A2 | GTS | C1/C3 | D1/D2 | E1/E2/E3 | F1 |
| | 34.5/10.5 | 55.0 | 17.9/70.4 | 4.3/0.3 | 80.5/23.4/76.9 | 43.1 |
| 17 | A1(1)/A2 | GTS/BSE | C1/C3 | D1/D2 | E1/E2/E3 | F1 |
| | 38.0/7.8 | 46.9/7.3 | 17.5/55.4 | 4.2/0.3 | 89.0/23.0/75.5 | 42.3 |
| 18 | A1(1)/A2 | GTS/GDS/TEOS | C1/C3 | D1/D3 | E1/E2/E3 | F1 |
| | 38.0/7.8 | 36.5/11.5/6.2 | 17.5/55.4 | 4.2/0.3 | 89.0/23.0/75.5 | 42.3 |
| 19 | A1(1)/A2 | GTS | C1/C3 | D1/D2 | E1/E2/E3 | - |
| | 38.1/7.8 | 54.1 | 17.5/55.4 | 4.2/0.3 | 89.0/32.8/108.0 | |

| | | | | | | |
|---|---|---|---|---|---|---|
| Comp.: Component pbm: Part by mass CoA: Coating Agent | | | | | | |

### [Table 2]

**Table 2**

| Coating Agent | Comp. A pbm | Comp. B pbm | Comp. C pbm | Comp. D pbm | Comp. E pbm | Comp. F pbm |
|---|---|---|---|---|---|---|
| 20 | A1 (4) | GTS | C1/C3 | D1 | E1/E2/E3 | F1 |
| | 53.7 | 46.3 | 15.0/9.4 | 3.6 | 80.5/19.7/64.8 | 36.3 |
| 21 | A1(4) | GTS/GDS/TEOS | C1/C3 | D1 | E1/E2/E3 | - |
| | 53.7 | 30.8/10.5/5.0 | 18.2/34.4 | 3.6 | 80.5/22.5/74.0 | |
| 22 | A1(3)/A2 | GTS/GDS | C1/C2 | D1 | E1/E2/E4 | - |
| | 42.7/5.3 | 46.3/5.7 | 12.9/30.2 | 6.4 | 162.8/62.8/24.6 | |
| 23 | A1(3)/A2 | GTS/BSE | C2/C3 | D1 | E1/E2/E4 | - |
| | 43.6/5.5 | 43.1/7.8 | 2.2/30.9 | 6.5 | 87.3/64.2/104.2 | |
| 24 | A1(1)/A2 | GTS | C1/C3 | D1/D2 | E1/E2/E3 | F1 |
| | 15.6/31.3 | 53.1 | 13.1/177.3 | 4.1/0.3 | 36.4/8.3/27.4 | 42.8 |
| 25 | A1(1)/A2 | GTS | C1/C3 | D1/D2 | E1/E2/E3 | F1 |
| | 5.2/41.7 | 53.1 | 13.0/236.3 | 4.1/0.3 | 12.1/4.3/10.5 | 42.7 |

| | | | | | | |
|---|---|---|---|---|---|---|
| Comp.: Component pbm: part by mass | | | | | | |

### [Table 3]

**Table 3**

| CoA | Comp. A pbm | Comp. B pbm | Comp. C pbm | Comp. D pbm | Comp. E pbm | Comp. F pbm |
|---|---|---|---|---|---|---|
| 26 | A1(1)/A2 | GTS | C1/C3 | D1 | E1/E2/E3/E4 | - |
| | 33.8/6.9 | 67.7 | 15.5/49.1 | 3.8 | 98.1/66.6/19.3/38.6 | |
| 27 | A1(1)/A2 | GTS | C1/C3 | D1 | E1/E2/E3/E4 | - |
| | 35.5/7.3 | 71.1 | 16.3/51.5 | 3.9 | 103.0/49.9/20.3/40.5 | |
| 28 | A1(1)/A2 | GTS | C1/C3 | D1 | E1/E2/E3/E4 | - |
| | 35.5/7.3 | 71.1 | 16.3/51.5 | 3.9 | 103.0/49.9/35.3/25.5 | |
| 29 | A1(1)/A2 | GTS | C1/C3 | D1 | E1/E2/E3/E4 | - |
| | 35.5/7.3 | 71.1 | 16.3/51.5 | 3.9 | 103.0/49.9/10.3/50.5 | |
| 30 | A1(1)/A2 | GTS/ATM | C1/C3 | D1 | E1/E2/E3/E4 | - |
| | 33.8/6.9 | 67.7/0.49 | 15.5/49.1 | 3.8 | 98.1/66.6/19.3/38.6 | |
| 31 | A1(1)/A2 | GTS/ATM | C1/C3 | D1 | E1/E2/E3/E4 | - |
| | 35.5/7.3 | 71.1/0.52 | 16.3/51.5 | 3.9 | 103.0/49.9/20.3/40.5 | |
| 32 | A1(1)/A2 | GTS/ATM | C1/C3 | D1 | E1/E2/E3/E4 | - |
| | 35.5/7.3 | 71.1/0.52 | 16.3/51.5 | 3.9 | 103.0/49.9/35.3/25.5 | |
| 33 | A1(1)/A2 | GTS/ATM | C1/C3 | D1 | E1/E2/E3/E4 | - |
| | 35.5/7.3 | 71.1/0.52 | 16.3/51.5 | 3.9 | 103.0/49.9/10.3/50.5 | |
| 34 | A1(1)/A2 | GTS/ATM | C1/C3 | D1 | E1/E2/E3/E4 | - |
| | 33.8/6.9 | 67.7/0.49 | 15.5/49.1 | 3.8 | 118.1/46.6/19.3/38.6 | |
| 35 | A1(1)/A2 | GTS/ATM | C1/C3 | D1 | E1/E2/E3/E4 | - |
| | 33.8/6.9 | 67.7/0.49 | 15.5/49.1 | 3.8 | 78.1/85.9/19.3/38.6 | |
| 36 | A1(1)/A2 | GTS/ATM | C1/C3 | D 1 | E1/E2/E3/E4 | - |
| | 35.5/7.3 | 71.1/1.56 | 16.3/51.5 | 3.9 | 103.0/49.9/20.3/40.5 | |

| | | | | | | |
|---|---|---|---|---|---|---|
| Comp.: Component pbm: part by mass CoA: Coating Agent | | | | | | |

### Example 1

### [formation of hard coat film]

The optical substrate (lens substrate) MRA having a thickness of about 2 mm was immersed in a 50°C 20 mass% sodium hydroxide aqueous solution to carry out alkali etching for 5 minutes by using an ultrasonic cleaner. After alkali etching, the lens substrate was washed with tap water and then with 50°C distilled water to remove the remaining alkaline matter and left for about 10 minutes until its temperature became room temperature. The coating agent 1 was dip coted on this lens substrate at 25°C and a pulling speed of 15 cm/min. Thereafter, it was precured in a 70°C oven for 15 minutes and cured at 110°C for 3 hours to form a hard coat film. The obtained hard coat film was a colorless transparent film having a thickness of about 2 µm and a refractive index of 1.60.

### [evaluation results of optical article]

The adhesion after immersion in boiling water, steel wool scratch resistance, weather-resistant adhesion and yellowness of this optical article (hard coat lens) were evaluated. As a result, as shown in Table 2, the adhesion after immersion in boiling water was not less than 5 hours, the steel wool scratch resistance was A, the weather-resistant adhesion was 240 hours, and the yellowness was 1.7. These evaluations were made by the following methods.

### (adhesion after immersion in boiling water)

The obtained optical article (hard coat lens) was put into boiled distilled water to evaluate the adhesion of the hard coat lens every hour. A cross-cut tape test was carried out in accordance with JISD-0202 to evaluate adhesion between the hard coat film and the lens before the test and every hour during the test. That is, a cutter knife was used to make cuts in the surface of the hard coat film at intervals of about 1 mm to form 100 squares. A cellophane adhesive tape (Cellotape (registered trademark) of NICHIBAN Co., Ltd.) was firmly affixed to the hard coat film and then pulled off and exfoliated at a stroke from the surface in a 90° direction to count the number of remaining squares of the hard coat film. The evaluation result is a testing time when the number of remaining squares becomes less than 90. For example, "3 hours" means that the number of squares remaining after 3 hours of acceleration in the cross-cut tape test becomes less than 90. "Not less than 5 hours" means that the number of squares remaining even after 5 hours of acceleration is not less than 90.

### (steel wool scratch resistance)

The surface of the optical article (surface of the hard coat film) was rubbed back and forth 10 times with steel wool (Bonstar #0000 of Nippon Steel Wool Co., Ltd.) under a load of 3 kg to evaluate the degree of scratching visually. The evaluation criteria are given below.
A: not scratched (no scratch is seen visually)
B: almost not scratched (1 or more to less than 5 scratches are seen visually)
C: slightly scratched (5 or more to less than 10 scratches are seen visually)
D: scratched (10 or more scratches are seen visually)
E: exfoliation of hard coat film occurs

### (weather-resistant adhesion)

The obtained optical article (hard coat lens) was left under a radiant intensity of 1.55 W/cm² (340 nm) for 8 hours (lens surface temperature of about 60°C) and then under humidification for 4 hours (lens surface temperature of about 60°C) by using the QUV Accelerated Weathering Testers of Q-LAB Co., Ltd. and evaluated every 2 cycles (total of 24 hours) of the test, and the test was made for a maximum of 360 hours. A cross-cut tape test was carried out in accordance with JISD-0202 to evaluate adhesion between the hard coat film and the lens before the test and every 24 hours during the test. That is, a cutter knife was used to make cuts in the surface of the hard coat film at intervals of about 1 mm to form 100 squares. A cellophane adhesive tape (Cellotape (registered trademark) of NICHIBAN Co., Ltd.) was firmly affixed to the hard coat film and then pulled off and exfoliated at a stroke from the surface in a 90° direction to count the number of remaining squares of the hard coat film. The evaluation result is a testing time when the number of remaining squares becomes less than 90. For example, "100 hours" means that the number of squares remaining after 100 hours of acceleration in the cross-cut tape test becomes less than 90. "360 hours" means that the number of squares remaining even after 360 hours of acceleration is not less than 90.

### (yellowness)

The yellowness (YI) of the obtained optical article (hard coat lens) was obtained by using the SM color computer (SM-T) of Suga Test Instruments Co., Ltd.

The above results are shown in Table 4.

### Example 2 to 99

### [formation of hard coat film]

Optical articles (hard coat lenses) having a hard coat film were manufactured by using coating agents obtained from compositions shown in Table 1, Table 2 and Table 3 and plastic lens substrates and applying the coating agents in the same manner as in Example 1 and evaluated. The evaluation results are shown in Table 4, Table 5 and Table 6.

As for Examples 80 to 99, a bifocal lens having a BC of 4.0 and an addition of 2.50 was also coated and appearance evaluation such as a liquid drip from a small ball part was made. The evaluation criteria are given below.

### (appearance evaluation criteria)

A: there is no liquid drip from small ball, or amount of a liquid drip is smaller than 0.5 mm
B: amount of a liquid drip from small ball is 0.5 to 1.0 mm
C: amount of a liquid drip from small ball is larger than 1.0 mm

### [Table 4]

**Table 4**

| Ex. | Coating Agent | Lens substrate | Adhesion after immersion in boiling water | Scratch resistance | Weather-resistant adhesion | YI |
|---|---|---|---|---|---|---|
| 1 | 1 | MRA | 5 hours or more | A | 240 hr. | 1.7 |
| 2 | 2 | MRA | 5 hours or more | A | 240 hr. | 1.6 |
| 3 | 3 | MRA | 5 hours or more | C | 240 hr. | 1.6 |
| 4 | 4 | MRA | 5 hours or more | C | 240 hr. | 1.6 |
| 5 | 5 | MRA | 5 hours or more | A | 240 hr. | 1.7 |
| 6 | 6 | MRA | 5 hours or more | B | 240 hr. | 1.6 |
| 7 | 7 | MRA | 5 hours or more | A | 240 hr. | 1.6 |
| 8 | 8 | MRA | 5 hours or more | A | 240 hr. | 1.6 |
| 9 | 9 | MRA | 5 hours or more | A | 240 hr. | 1.6 |
| 10 | 10 | MRA | 5 hours or more | A | 240 hr. | 1.7 |
| 11 | 11 | MRA | 5 hours or more | A | 240 hr. | 1.8 |
| 12 | 12 | MRA | 5 hours or more | A | 240 hr. | 1.9 |
| 13 | 13 | MRA | 5 hours or more | A | 240 hr. | 2.0 |
| 14 | 14 | MRA | 5 hours or more | A | 240 hr. | 2.2 |
| 15 | 15 | MRA | 5 hours or more | A | 240 hr . | 1.7 |
| 16 | 16 | MRA | 5 hours or more | A | 240 hr. | 1.8 |
| 17 | 17 | MRA | 5 hours or more | A | 240 hr. | 1.7 |
| 18 | 18 | MRA | 5 hours or more | A | 240 hr. | 1.7 |
| 19 | 19 | MRA | 5 hours or more | A | 240 hr. | 1.7 |
| 20 | 1 | MRB | 5 hours or more | A | 240 hr. | 1.7 |
| 21 | 2 | MRB | 5 hours or more | A | 168 hr. | 1.6 |
| 22 | 3 | MRB | 5 hours or more | C | 144 hr. | 1.6 |
| 23 | 4 | MRB | 5 hours or more | C | 192 hr. | 1.7 |
| 24 | 5 | MRB | 5 hours or more | A | 216 hr. | 1.8 |
| 25 | 6 | MRB | 5 hours or more | B | 216 hr. | 1.7 |
| 26 | 7 | MRB | 5 hours or more | A | 216 hr. | 1.7 |
| 27 | 8 | MRB | 5 hours or more | A | 120 hr. | 1.6 |
| 28 | 9 | MRB | 5 hours or more | A | 192 hr. | 1.6 |
| 29 | 10 | MRB | 5 hours or more | A | 216 hr. | 1.7 |
| 30 | 11 | MRB | 5 hours or more | A | 240 hr. | 1.8 |
| 31 | 12 | MRB | 5 hours or more | A | 240 hr. | 1.9 |
| 32 | 13 | MRB | 5 hours or mo r e | A | 240 hr. | 2.0 |
| 33 | 14 | MRB | 5 hours or more | A | 240 hr. | 2.1 |
| 34 | 15 | MRB | 5 hours or more | A | 216 hr. | 1.6 |
| 35 | 16 | MRB | 5 hours or more | A | 240 hr. | 1.8 |
| 36 | 17 | MRB | 5 hours or more | A | 240 hr. | 1.7 |
| 37 | 18 | MRB | 5 hours or more | A | 240 hr. | 1.7 |
| 38 | 19 | MRB | 5 hours or more | A | 192 hr. | 1.7 |

| | | | | | | |
|---|---|---|---|---|---|---|
| Ex.: Example, hr.: hours | | | | | | |

### [Table 5]

**Table 5**

| Ex. | Coating Agent | Lens Substrate | Adhesion after immersion in boiling water | Scratch resistance | Weather-resistant adhesion | YI |
|---|---|---|---|---|---|---|
| 39 | 1 | MRC | 5 hr. or more | A | 240 hr. | 2.4 |
| 40 | 2 | MRC | 5 hr. or more | A | 192 hr. | 2.3 |
| 41 | 3 | MRC | 5 hr. or more | C | 144 hr . | 2.3 |
| 42 | 4 | MRC | 5 hr. or more | C | 192 hr. | 2.3 |
| 43 | 5 | MRC | 5 hr. or more | A | 216 hr. | 2.4 |
| 44 | 6 | MRC | 5 hr. or more | B | 216 hr. | 2.3 |
| 45 | 7 | MRC | 5 hr. or more | A | 216 hr. | 2.3 |
| 46 | 8 | MRC | 5 hr. or more | A | 120 hr. | 2.3 |
| 47 | 9 | MRC | 5 hr. or more | A | 192 hr. | 2.3 |
| 48 | 10 | MRC | 5 hr. or more | A | 216 hr. | 2.4 |
| 49 | 11 | MRC | 5 hr. or more | A | 240 hr. | 2.5 |
| 50 | 12 | MRC | 5 hr. or more | A | 240 hr. | 2.6 |
| 51 | 13 | MRC | 5 hr. or more | A | 240 hr. | 2.7 |
| 52 | 14 | MRC | 5 hr. or more | A | 240 hr. | 2.9 |
| 53 | 15 | MRC | 5 hr. or more | A | 216 hr. | 2.3 |
| 54 | 16 | MRC | 5 hr. or more | A | 240 hr. | 2.5 |
| 55 | 17 | MRC | 5 hr. or more | A | 240 hr. | 2.4 |
| 56 | 18 | MRC | 5 hr. or more | A | 240 hr. | 2.4 |
| 57 | 19 | MRC | 5 hr. or more | A | 192 hr. | 2.4 |
| 58 | 1 | TRA | 5 hr. or more | A | 240 hr. | 1.8 |
| 59 | 2 | TRA | 5 hr. or more | A | 216 hr. | 1.7 |
| 60 | 3 | TRA | 5 hr. or more | C | 216 hr. | 1.7 |
| 61 | 4 | TRA | 5 hr. or more | c | 216 hr. | 1.7 |
| 62 | 5 | TRA | 5 hr. or more | A | 240 hr. | 1.8 |
| 63 | 6 | TRA | 5 hr. or more | B | 216 hr. | 1.7 |
| 64 | 7 | TRA | 5 hr. or more | A | 216 hr. | 1.7 |
| 65 | 8 | TRA | 5 hr. or more | A | 144 hr. | 1.7 |
| 66 | 9 | TRA | 5 hr. or more | A | 216 hr. | 1.7 |
| 67 | 10 | TRA | 5 hr. or more | A | 240 hr. | 1.8 |
| 68 | 11 | TRA | 5 hr. or more | A | 240 hr . | 1.9 |
| 69 | 12 | TRA | 5 hr. or more | A | 240 hr. | 2 |
| 70 | 13 | TRA | 5 hr. or more | A | 240 hr. | 2.1 |
| 71 | 14 | TRA | 5 hr. or more | A | 240 hr. | 2.3 |
| 72 | 15 | TRA | 5 hr. or more | A | 216 hr. | 1.8 |

| Ex. | Coating Agent | Lens Substrate | Adhesion after immersion in boilinq water | Scratch resistance | Weather-resistant adhesion | YI |
|---|---|---|---|---|---|---|
| 73 | 16 | TRA | 5 hr. or more | A | 240 hr. | 1.9 |
| 74 | 17 | TRA | 5 hr. or more | A | 240 hr. | 1.8 |
| 75 | 18 | TRA | 5 hr. or more | A | 240 hr. | 1.8 |
| 76 | 19 | TRA | 5 hr. or more | A | 216 hr. | 1.8 |
| 77 | 1 | CR | 5 hr. or more | A | 240 hr. | 1.9 |
| 78 | 1 | TRB | 5 hr. or more | A | 240 hr. | 2.0 |
| 79 | 1 | PC1 | 5 hr. or more | A | 168 hr. | 2.2 |

| | | | | | | |
|---|---|---|---|---|---|---|
| Ex.: Example, hr.: hours | | | | | | |

### [Table 6]

**Table 6**

| Ex. | Coating Agent | Lens Substrate | Adhesion after immersion in boiling water | Scratch resistance | Weather-resistant adhesion | YI | Appearance |
|---|---|---|---|---|---|---|---|
| 80 | 26 | MRA | 5 hr. or more | A | 240 hr. | 1.7 | A |
| 81 | 27 | MRA | 5 hr. or more | A | 240 hr. | 1.7 | B |
| 82 | 28 | MRA | 5 hr. or more | A | 240 hr. | 1.7 | C |
| 83 | 29 | MRA | 5 hr. or more | A | 196 hr. | 1.7 | B |
| 84 | 30 | MRA | 5 hr. or more | A | 360 hr. | 1.7 | A |
| 85 | 31 | MRA | 5 hr. or more | A | 360 hr. | 1.7 | B |
| 86 | 32 | MRA | 5 hr. or more | A | 360 hr. | 1.7 | C |
| 87 | 33 | MRA | 5 hr. or more | A | 288 hr. | 1.7 | B |
| 88 | 34 | MRA | 5 hr. or more | A | 288 hr. | 1.7 | A |
| 89 | 35 | MRA | 5 hr. or more | A | 288 hr. | 1.7 | A |
| 90 | 36 | MRA | 5 hr. or more | B | 360 hr. | 1.7 | A |
| 91 | 30 | MRB | 5 hr. or more | A | 360 hr. | 1.7 | A |
| 92 | 30 | MRC | 5 hr. or more | A | 360 hr. | 2.4 | A |
| 93 | 30 | TRA | 5 hr. or more | A | 360 hr. | 1.9 | A |
| 94 | 30 | TRB | 5 hr. or more | A | 360 hr. | 2.0 | A |
| 95 | 30 | TRC | 5 hr. or more | A | 120 hr. | 2.1 | A |
| 96 | 30 | TRD | 5 hr. or more | A | 120 hr. | 2.1 | A |
| 97 | 30 | TRE | 5 hr. or more | A | 360 hr. | 1. 8 | A |
| 98 | 30 | CR | 5 hr. or more | A | 360 hr. | 1.9 | A |
| 99 | 30 | PC1 | 5 hr. or more | A | 360 hr. | 2.2 | A |

| | | | | | | | |
|---|---|---|---|---|---|---|---|
| Ex.: Example, hr.: hours | | | | | | | |

### Examples 100 to 123

Further, coating agents 2, 4, 5, 17, 18 and 30 obtained from the compositions shown in Table 1 or Table 3 were stored at 15°C for 8 weeks by the following method and evaluated for physical properties in the same manner as described above. The evaluation results are shown in Table 7.

### (storage stability)

After each coating agent (coating composition) was prepared, it was stored at 15°C for 8 weeks and then used to form a hard coat film in the same manner as described above, and the adhesion after immersion in boiling water, steel wool scratch resistance, weather-resistant adhesion and yellowness of the obtained hard coat film were evaluated.

### [Table 7]

**Table 7**

| Ex. | Coating Agent | Lens substrate | 8 weeks of storage at 15 °C | | | |
|---|---|---|---|---|---|---|
| | | | Adhesion after immersion in boiling water | Scratch resistance | Weather-resistance adhesion | YI |
| 100 | 2 | MRA | 5 hr. or more | A | 240 hr. | 1.6 |
| 101 | 4 | MRA | 5 hr. or more | C | 240 hr. | 1.6 |
| 102 | 5 | MRA | 5 hr. or more | A | 240 hr. | 1.7 |
| 103 | 17 | MRA | 5 hr. or more | C | 216 hr. | 1.7 |
| 104 | 18 | MRA | 5 hr. or more | D | 192 hr. | 1.7 |
| 105 | 30 | MRA | 5 hr. or more | A | 360 hr. | 1.6 |
| 106 | 2 | MRB | 5 hr. or more | A | 168 hr. | 1.7 |
| 107 | 4 | MRB | 5 hr. or more | C | 192 hr. | 1.8 |
| 108 | 5 | MRB | 5 hr. or more | A | 216 hr. | 1.7 |
| 109 | 17 | MRB | 5 hr. or more | C | 144 hr. | 1.9 |
| 110 | 18 | MRB | 5 hr. or more | D | 120 hr. | 1.8 |
| 111 | 30 | MRB | 5 hr. or more | A | 360 hr. | 1.6 |
| 112 | 2 | MRC | 5 hr. or more | A | 192 hr. | 2.3 |
| 113 | 4 | MRC | 5 hr. or more | C | 192 hr. | 2.3 |
| 114 | 5 | MRC | 5 hr. or more | A | 216 hr. | 2.4 |
| 115 | 17 | MRC | 5 hr. or more | C | 168 hr. | 2.4 |
| 116 | 18 | MRC | 5 hr. or more | D | 144 hr. | 2.4 |
| 117 | 30 | MRC | 5 hr. or more | A | 360 hr. | 2.4 |
| 118 | 2 | TRA | 5 hr. or more | A | 216 hr. | 1.7 |
| 119 | 4 | TRA | 5 hr. or more | c | 216 hr. | 1.7 |
| 120 | 5 | TRA | 5 hr. or more | A | 240 hr. | 1.8 |
| 121 | 17 | TRA | 5 hr. or more | C | 192 hr. | 1.8 |
| 122 | 18 | TRA | 5 hr. or more | D | 168 hr. | 1.8 |
| 123 | 30 | TRA | 5 hr. or more | A | 360 hr. | 1.9 |

| | | | | | | |
|---|---|---|---|---|---|---|
| Ex.: Example, hr.: hours | | | | | | |

### Comparative Examples 1 to 7

Coating agents 20 to 25 obtained from the compositions shown in Table 2 and plastic lens substrates shown in Table 8 were used to manufacture plastic lens substrates which were coated with the coating agents in the same manner as in Example 1 and evaluate them. The evaluation results are shown in Table 8.

### [Table 8]

**Table 8**

| Comp. Ex. | Coating Agent | Lens substrate | Adhesion after immersion in boiling water | Scratch resistance | Weather-resistant adhesion | YI |
|---|---|---|---|---|---|---|
| 1 | 20 | MRB | 5 hr. or more | A | 72 hr. | 1.7 |
| 2 | 21 | MRB | 5 hr. or more | A | 72 hr. | 1.7 |
| 3 | 22 | MRB | 5 hr. or more | A | 96 hr. | 1. 7 |
| 4 | 23 | MRB | 5 hr. or more | A | 96 hr. | 1.7 |
| 5 | 24 | MRB | 5 hr. or more | B | 240 hr. | 2.8 |
| 6 | 25 | MRB | 5 h r . or more | C | 240 hr. | 3.2 |
| 7 | 24 | MRC | 5 hr. or more | B | 240 hr. | 3.4 |

| | | | | | | |
|---|---|---|---|---|---|---|
| Comp. Ex.: Comparative Example hr.: hours | | | | | | |

As obvious from the above examples, hard coat films having excellent adhesion after immersion in boiling water, scratch resistance and weather-resistant adhesion could be formed by mixing together the inorganic oxide fine particles (A), hydrolyzable group-containing organic silicon compound (B), water or acid aqueous solution (C), curing catalyst (D), organic solvent (E) and aromatic alcohol (F) of the present invention. Coating compositions comprising only a reactive organic silicon compound as the component (B) were particularly excellent in storage stability and had the same levels of adhesion after immersion in boiling water, scratch resistance and weather-resistant adhesion as those of a coating agent in the initial stage of preparation even after 8 weeks of storage at 15°C.

Meanwhile, in Comparative Examples 1 to 4 whose compositions were outside the preferred ranges, sufficiently high weather-resistant adhesion could not be obtained. In Comparative Examples 5 to 7 in which the cerium oxide fine particles were contained in an amount above the preferred range, satisfactory yellowness could not be obtained.

### Example 124

The optical substrate (lens substrate) MRA having a center thickness of about 6.1 mm, an edge thickness of about 1.1 mm, a diameter of 65 mm and +6.00 diopters was immersed in a 50°C 20 mass% sodium hydroxide aqueous solution to carry out alkali etching for 5 minutes by using an ultrasonic cleaner. After alkali etching, it was rinsed with tap water and then with 50°C distilled water to remove the remaining alkaline matter and left for about 10 minutes until its temperature became room temperature. This lens substrate was dip coated with the coating agent 30 (viscosity of 3.8 mPa·s (25°C)) at 25°C and a pulling speed of 15 cm/min by using a fixing jig shown in Fig. 1 which extends downward toward the surface of a dip solution (in a truncated chevron shape when seen from the front of the lens) when seen from the lens fixing position to fix two locations above the center of the lens. The velocity of clean air supplied at the time of dipping was 0.1 m/sec. Thereafter, the coating agent was precured in a 70°C oven for 15 minutes and then cured at 110°C for 3 hours to form a hard coat film.

### [evaluation results of hard coat film]

The appearance of the hard coat film at the fixing positions between the optical substrate and the fixing jig was evaluated. The evaluation result of the appearance was A. The evaluation criteria are given below.
A: At two locations above the center of lens out of three contact locations between optical substrate and fixing jig, the length of a part having an appearance defect is less than 0.5 mm
B: At two locations above the center of lens out of three contact locations between optical substrate and fixing jig, the length of a part having an appearance defect is 0.5 mm or more to less than 1.0 mm
C: At two locations above the center of lens out of three contact locations between optical substrate and fixing jig, the length of a part having an appearance defect is 1.0 mm or more to less than 2.0 mm
D: At two locations above the center of lens out of three contact locations between optical substrate and fixing jig, the length of a part having an appearance defect is 2.0 mm or more

### Example 125

A hard coat film was formed in the same manner as in Example 124 except that a fixing jig shown in Fig. 2 which extends upward above the surface of a dip solution (in a reversed truncated chevron shape when seen from the front of the lens) when seen from the lens fixing position was used to fix two locations above the center of the lens. The evaluation result of the appearance was B.

### Example 126

A hard coat film was formed in the same manner as in Example 124 except that the velocity of clean air supplied at the time of dipping was set to 0.5 m/sec. The evaluations result of the appearance was A.

### Example 127

A hard coat film was formed in the same manner as in Example 125 except that the velocity of clean air supplied at the time of dipping was set to 0.5 m/sec. The evaluation result of the appearance was C.

### Explanation of reference symbols

1: lens
2: lens fixing jig
3: position for fixing lower end of lens by lens fixing jig
4: fixing arm of lens fixing jig
5: position for fixing upper part of lens by lens fixing jig

## Claims

1. A coating composition comprising (A) inorganic oxide fine particles, (B) a hydrolyzable group-containing organic silicon compound, (C) water or an acid aqueous solution, (D) a curing catalyst and (E) an organic solvent (the organic solvent (E) does not include an aromatic alcohol (F)), wherein
the inorganic oxide fine particles (A) contain 100 parts by mass of (A1) first inorganic oxide fine particles containing not less than 50 mass% of a zirconium oxide component and 0.1 to 90 parts by mass of (A2) cerium oxide fine particles.

2. The coating composition according to claim 1, which comprises 40 to 80 parts by mass of the hydrolyzable group-containing organic silicon compound (B), 1 to 90 parts by mass of water or the acid aqueous solution (C), 0.1 to 5 parts by mass of the curing catalyst (D) and 50 to 500 parts by mass of the organic solvent (E) based on 100 parts by mass of the total of the inorganic oxide fine particles (A) and the hydrolyzable group-containing organic silicon compound (B).

3. The coating composition according to claim 1 or 2, wherein the curing catalyst (D) contains an acetylacetonate complex.

4. The coating composition according to any one of claims 1 to 3, wherein the hydrolyzable group-containing organic silicon compound (B) contains at least one of an organic silicon compound containing a γ-glycidoxy group and an organic silicon compound containing an amino group.

5. The coating composition according to any one of claims 1 to 4, wherein the organic solvent (E) contains at least one selected from the group consisting of (Ea) an aliphatic alcohol having a boiling point of not higher than 100°C, (Eb) a cellosolve-based alcohol having a boiling point of not lower than 100°C and (Ec) a high-boiling point solvent having a boiling point of not lower than 150°C.

6. The coating composition according to claim 5, wherein 70 to 200 parts by mass of the aliphatic alcohol having a boiling point of not higher than 100°C (Ea), 10 to 50 parts by mass of the cellosolve-based alcohol having a boiling point of not lower than 100°C (Eb) and 10 to 100 parts by mass of the high-boiling point solvent having a boiling point of not lower than 150°C (Ec) are used based on 100 parts by mass of the total of the inorganic oxide fine particles (A) and the hydrolyzable group-containing organic silicon compound (B).

7. An optical article having a hard coat film which is a cured product of the coating composition of any one of claims 1 to 6 on a plastic optical substrate containing sulfur and having a refractive index of not less than 1.59 and a glass transition temperature of not higher than 125°C.

8. A method of forming a hard coat film on a plastic optical substrate by dipping the optical substrate into the coating composition of any one of claims 1 to 6, wherein
the optical substrate is vertically fixed at three locations with a fixing jig having three arms for fixing the optical substrate at the three locations to be dipped into the coating composition, the three locations consist of one for fixing the lower end part of the optical substrate when seen from the surface of a dip solution and two for fixing the optical substrate at a position having an angle of 90 to 180° and at a position having an angle of 180 to 270° from the lower end part, and the two arms for fixing the two locations different from the lower end part extend downward when seen from the positions of the two locations.
